# EUROPEAN PATENT APPLICATION

(11) **EP 3 075 956 A1**
(43) Date of publication of application: **05.10.2016**
(21) Application number: 16162983.7
(22) Date of filing: 30.03.2016
(51) Int. Cl.: F01D 5/18, F02C 7/143, F02C 7/224, F02C 6/18

(54) **HEAT PIPE INTERCOOLING SYSTEM FOR A TURBOMACHINE**

(30) Priority: 02.04.2015 US 201514676889
(71) Applicant: General Electric Company, Schenectady, NY 12345 (US)
(72) Inventor: EKANAYAKE, Sanji, Atlanta, GA Georgia 30339 (US); SCIPIO, Alston Ilford, Atlanta, GA Georgia 30339 (US); RIZZO, Joseph Paul, Greenville, SC South Carolina 29615 (US)
(74) Representative: Lee, Brenda

(57) **Abstract**

A turbomachine includes a compressor including an intake portion and an outlet portion. The compressor compresses air received at the intake portion to form a compressed airflow that exits into the outlet portion. A combustor is operably connected with the compressor, and the combustor receives the compressed airflow. A turbine is operably connected with the combustor. The turbine receives combustion gas flow from the combustor. An intercooler is operatively connected to the compressor, and at least a portion of the intercooler is placed in an inter-stage gap (113) between rotor blades (111) and stator vanes (112) of the compressor. The intercooler has a plurality of heat pipes (222) that extend into the inter-stage gap. The plurality of heat pipes is operatively connected to one or more manifolds (224). The plurality of heat pipes and the one or more manifolds are configured to transfer heat from the compressed airflow to a plurality of heat exchangers (241-244).

## Description

### BACKGROUND OF THE INVENTION

Exemplary embodiments of the present invention relate to the art of turbomachines and, more particularly, to a heat pipe intercooler for a turbomachine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine. In some cases, the compressed airflow leaving the compressor is re-compressed to achieve certain combustion efficiencies. However, recompressing the compressed airflow elevates airflow temperature above desired limits. Accordingly, prior to being recompressed, the airflow is passed through an intercooler. The intercooler, which is between two compressor stages, lowers the temperature of the compressed airflow such that, upon recompressing, the temperature of the recompressed airflow is within desired limits. However, conventional intercoolers are large systems requiring considerable infrastructure and capital costs.

Simple and combined cycle gas turbine systems are designed to use a variety of fuels ranging from gas to liquid, at a wide range of temperatures. In some instances, the fuel might be at a relatively low temperature when compared to the compressor discharge air temperature. Utilizing low temperature fuel impacts emissions, performance, and efficiency of the gas turbine system. To improve these characteristics, it is desirable to increase the fuel temperature before combusting the fuel.

By increasing the temperature of the fuel before it is burned, the overall thermal performance of the gas turbine system may be enhanced. Fuel heating generally improves gas turbine system efficiency by reducing the amount of fuel required to achieve the desired firing temperature. One approach to heating the fuel is to use electric heaters or heat derived from a combined cycle process to increase the fuel temperature. However, existing combined cycle fuel heating systems often use steam flow that could otherwise be directed to a steam turbine to increase combined cycle output.

### BRIEF DESCRIPTION OF THE INVENTION

In an aspect of the present invention, a turbomachine includes a compressor including an intake portion and an outlet portion. The compressor compresses air received at the intake portion to form a compressed airflow that exits into the outlet portion. A combustor is operably connected with the compressor, and the combustor receives the compressed airflow. A turbine is operably connected with the combustor. The turbine receives combustion gas flow from the combustor. An intercooler is operatively connected to the compressor, and at least a portion of the intercooler is placed in an inter-stage gap between rotor blades and stator vanes of the compressor. The intercooler has a plurality of heat pipes that extend into the inter-stage gap. The plurality of heat pipes is operatively connected to one or more manifolds. The plurality of heat pipes and the one or more manifolds are configured to transfer heat from the compressed airflow to a plurality of heat exchangers.

In another aspect of the present invention, an intercooler for a turbomachine is provided. The turbomachine includes a compressor, and a combustor is operably connected with the compressor. A turbine is operably connected with the combustor, and the intercooler is operatively connected to the compressor. At least a portion of the intercooler is placed in an inter-stage gap between rotor blades and stator vanes of the compressor. The intercooler includes a plurality of heat pipes that extend into the inter-stage gap. The plurality of heat pipes is operatively connected to one or more manifolds. The plurality of heat pipes and the one or more manifolds are configured to transfer heat from the compressed airflow to a plurality of heat exchangers.

In yet another aspect of the present invention, a method of extracting heat from a compressed airflow generated by a turbomachine includes the step of passing an airflow through a compressor. The compressor acts on the airflow to create a compressed airflow discharged into a compressor discharge case. An extracting step extracts heat from the compressed airflow by passing the compressed airflow over a plurality of heat pipes. The plurality of heat pipes is located in an inter-stage gap between rotor blades and stator vanes of the compressor. A conducting step conducts heat from the plurality of heat pipes to a heat pipe heat exchanger. The heat pipe heat exchanger is configured to transfer heat to a fuel heating heat exchanger. The inter-stage gap may be located in the air bleed-off stage of the compressor. The plurality of heat pipes may include a molten salt heat transfer medium including one or combinations of, potassium or sodium. The heat pipe heat exchanger may be operably connected to a circuit including a heat recovery steam generator heat exchanger.

### BRIEF DESCRIPTION OF THE DRAWINGS

FIG. 1 is a simplified schematic diagram of a turbomachine.
FIG. 2 is a partially schematic, axial sectional view through a portion of the turbomachine, according to an aspect of the present invention.
FIG. 3 illustrates a cross-sectional and schematic view of the intercooler, according to an aspect of the present invention.
FIG. 4 illustrates a partially schematic and radial cross-sectional view of the intercooler, according to an aspect of the present invention.
FIG. 5 illustrates a cross sectional shape of a circular or cylindrical heat pipe, according to an aspect of the present invention.
FIG. 6 illustrates a cross sectional shape of an oval heat pipe, according to an aspect of the present invention.
FIG. 7 illustrates a cross sectional shape of a polygonal heat pipe, according to an aspect of the present invention.
FIG. 8 illustrates a cross sectional shape of a circular or cylindrical heat pipe with a plurality of fins, according to an aspect of the present invention.
FIG. 9 illustrates a schematic view of a turbomachine incorporating the intercooler, according to an aspect of the present invention.
FIG. 10 illustrates a method for extracting heat from a compressed airflow generated by a turbomachine, according to an aspect of the present invention.

### DETAILED DESCRIPTION OF THE INVENTION

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

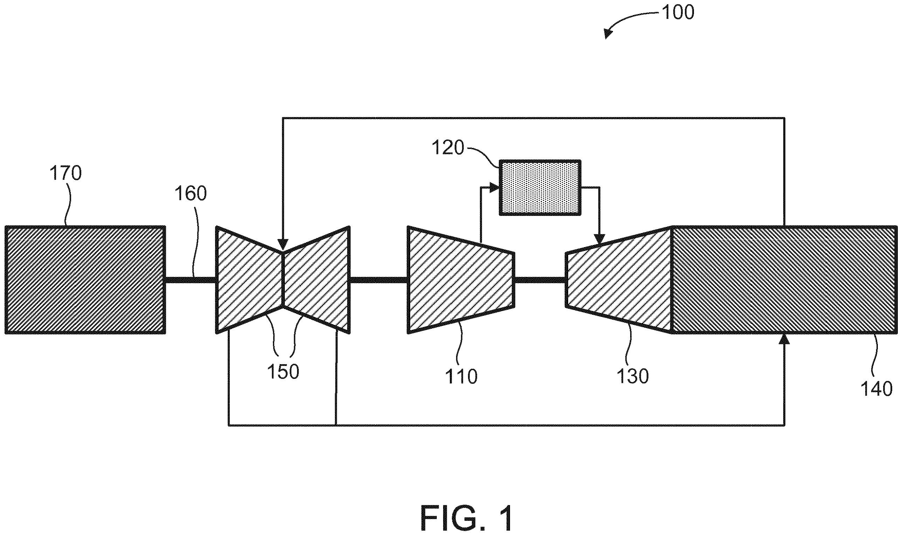

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the turbomachines are arranged in a single shaft configuration, and the shaft 160 drives a generator 170.

It is to be understood that the term turbomachine includes compressors, turbines or combinations thereof.

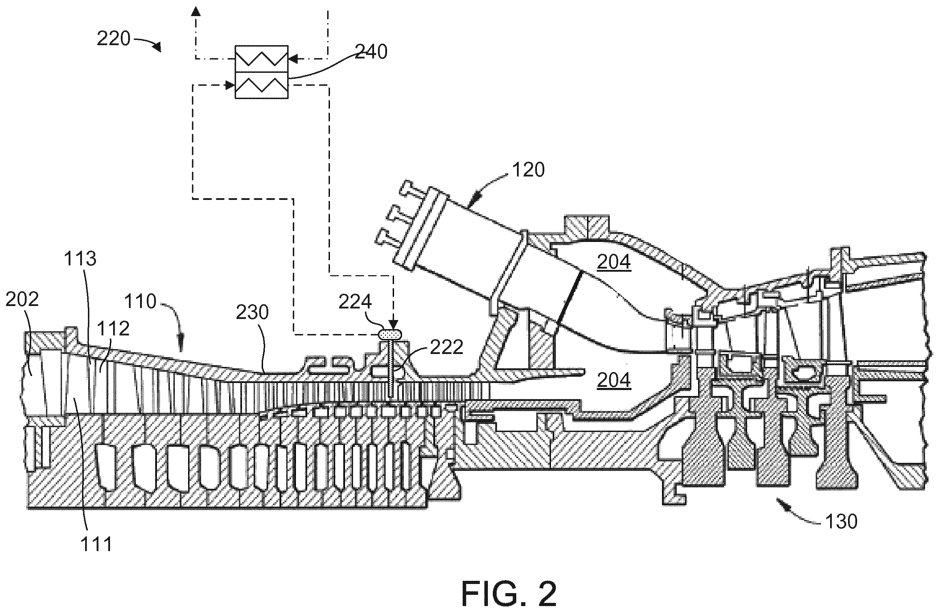

FIG. 2 is a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The combustor 120 is operably connected with the compressor 110, and the combustor 120 receives the compressed airflow. The turbine 130 is operably connected with the combustor 120, and the turbine 130 receives combustion gas flow from the combustor 120. An intercooler 220 is operatively connected to an inter-stage gap 113 of the compressor 110. The inter-stage gap 113 is a gap between rotor blades 111 and stator vanes 112 in the compressor. The inter-stage gap may be located between any adjacent rotor blades and stator vanes. The intercooler 220 includes a plurality of heat pipes 222 that extend into the inter-stage gap. For example, the inter-stage gap may be located between the first stage and the last stage, in an air bleed-off stage of the compressor, or at or between any stage(s) as desired in the specific application. The heat pipes 222 are operatively connected to one or more manifolds 224, and the heat pipes 222 and manifolds 224 are configured to transfer heat from the compressed airflow in the compressor to a plurality of heat exchangers 240.

The heat pipes 222 are placed or located in the inter-stage gap, so that the heat pipes extend from an outer portion of compressor case 230 and into the inter-stage gap. In the example shown, heat pipes 222 extend into the inter-stage gap corresponding to the 13^{th} stage of the compressor which corresponds to an air bleed-off stage. However, the heat pipes could be located at any desired point or stage along compressor 110. Each heat pipe 222 extends through the turbomachine casing and into the compressed airflow flow path. The heat pipes 222 absorb heat from the compressed airflow and lower the temperature thereof.

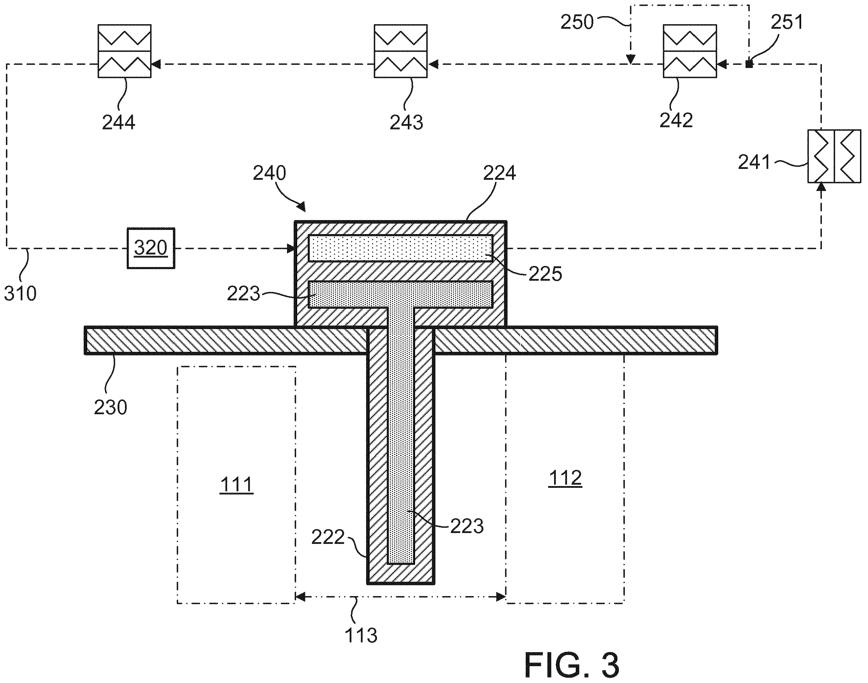

FIG. 3 illustrates a cross-sectional and schematic view of the intercooler, according to an aspect of the present invention. The heat pipe 222 extends through the CDC shell 230 or turbomachine shell and into the compressor's airflow. As one example only, the heat pipe is located in inter-stage gap 113, which may be the 13^{th} stage having 13^{th} stage rotor blade 111 and 13^{th} stage stator vane 112. However, it is to be understood that the heat pipes 222 may be located in any gap between blades and vanes or the gap between any stage of the compressor, as desired in the specific application. The heat pipe 222 includes a heat transfer medium 223, such as a liquid metal or molten salt. The manifold 224 includes a coolant/heat transfer medium 225, such as water, glycol or oil. The manifold 224 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifolds 224 to the heat transfer medium in conduit 310. As examples only, the conduit's heat transfer medium may be water, glycol, oil or any other suitable fluid. A pump 320 may be used to force the fluid through the conduit 310 and the heat exchangers. The heat exchangers may also include valve controlled bypass lines 250 (only one is shown for clarity). A valve 251 can be operated so that it directs flow around the heat exchanger (e.g., 242) via bypass line/conduit 250. This feature may be desirable if specific heat exchangers are to be "removed" (possibly temporarily) from the flow along conduit 310. The valves 251 can be manually controlled or remotely controlled.

The manifold 224 may include a heat transfer medium, such as water, steam, glycol or oil, or any other suitable fluid. The manifold 224 is connected to multiple heat pipes 222, and the heat pipes 222 may be arranged circumferentially about compressor. The heat pipes 222 include a heat transfer medium 223 which may be a liquid metal, molten salt or Qu material. As examples only, the heat transfer medium may be one or combinations of, aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium 223 may be a molten salt comprising potassium and/or sodium. The outer portion of the heat pipes 222 may be made of any suitable material capable of serving the multiple purposes of high thermal conductivity, high strength and high resistance to corrosion from the heat transfer medium.

The heat pipes 222 may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

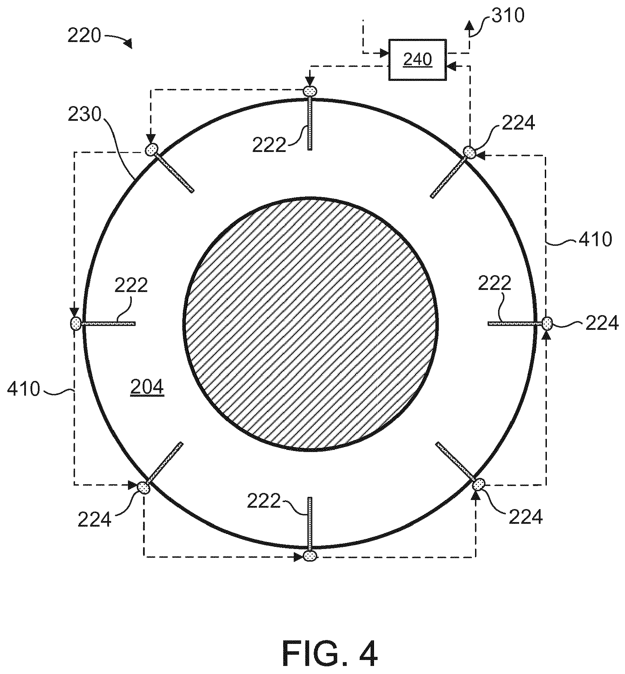

FIG. 4 illustrates a partially schematic and radial cross-sectional view of the intercooler, according to an aspect of the present invention. The heat pipes 222 are circumferentially located and distributed around the turbomachine 100 or compressor 110. The manifold 224 is connected in a circuit represented by line 410. For example, the manifold 224 would form a generally continuous flow loop around the turbomachine. A portion of this flow loop is interrupted and routed to the heat pipe heat exchanger 240, and the outlet therefrom is routed back the manifold 224. In this way, heat generated by the compressor airflow (via heat pipes 222) can be transferred to the heat exchanger 240.

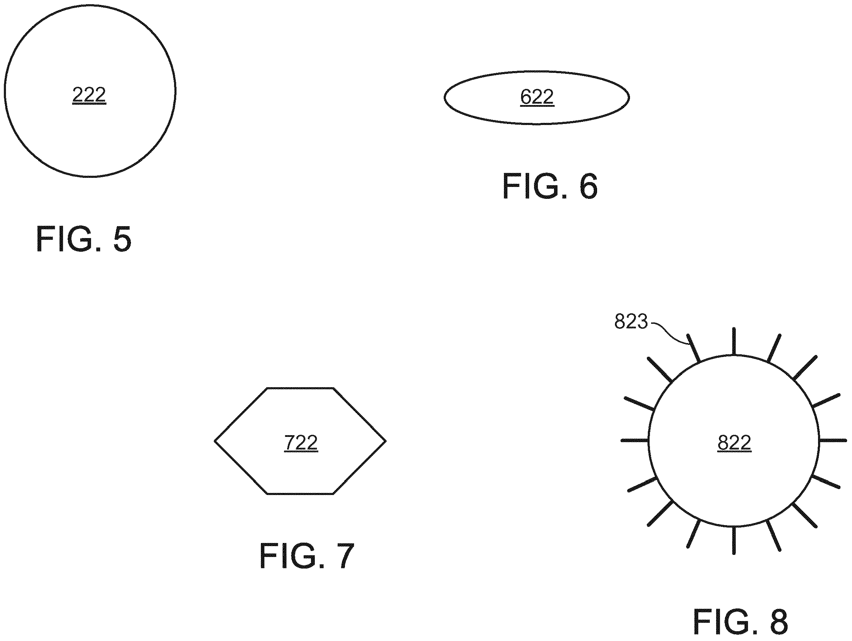

FIG. 5 illustrates a cross sectional shape of a circular or cylindrical heat pipe 222, according to an aspect of the present invention. A cylindrical heat pipe is easy to manufacture and install with conventional tools. FIG. 6 illustrates a cross sectional shape of an oval heat pipe 622, according to an aspect of the present invention. The oval cross sectional shape is more aerodynamic than the cylindrical heat pipe, and reduces pressure drop. FIG. 7 illustrates a cross sectional shape of a polygonal heat pipe 722, according to an aspect of the present invention. The polygonal shape may include rectangular, hexagonal, square or any other suitable polygonal shape. FIG. 8 illustrates a cross sectional shape of a circular or cylindrical heat pipe 822 with a plurality of fins 823, according to an aspect of the present invention. The fins 823 are configured to increase the heat transfer capability of the heat pipe, may be arranged axially as shown or radially, and may be comprised of a material having high thermal conductivity, such as copper or aluminum.

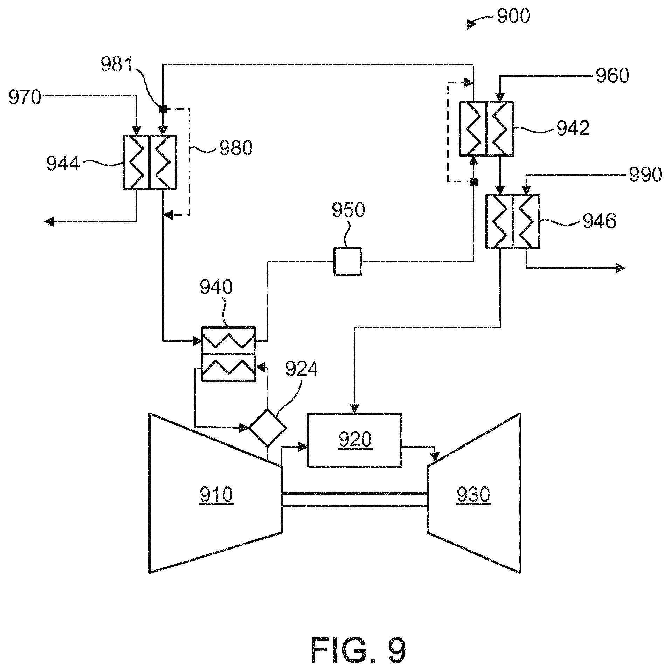

FIG. 9 illustrates a schematic view of a turbomachine 900 incorporating the intercooler, according to an aspect of the present invention. The turbomachine 900 includes a compressor 910, combustor 920 and turbine 930. The intercooler includes a plurality of heat pipes (not shown for clarity) connected to a manifold 924. The manifold 924 is connected to a heat pipe heat exchanger 940. A pump 950 circulates a coolant through a conduit system and a plurality of heat exchangers. The heat pipe heat exchanger is connected to a fuel gas pre-heater heat exchanger 942. Fuel gas 960 is input and travels to the combustor 920. The fuel gas pre-heater heat exchanger is connected to a heat recovery steam generator (HSRG) heat exchanger 944. Water 970 is input to the heat exchanger 944 and heated to an elevated temperature or steam, and is output to the HRSG economizer (not shown). Each heat exchanger may include a bypass line 980 and valve 981 to selectively bypass the respective heat exchanger. Only one such bypass line is shown in FIG. 9 for clarity. A primary fuel heater heat exchanger 946 may be fed by steam 990 from the HSRG (not shown), and the resultant heated fuel is delivered to combustor 920.

The valves 981 and bypass lines 980 (if connected on all heat exchangers) allow for improved control over fuel heating and machine efficiency. For example, heat exchangers 940 and 944 may be connected in a loop to only heat the water input to the HRSG. Heat exchangers 940 and 942 may be connected in a loop to pre-heat the fuel supply. This configuration may greatly reduce or eliminate the steam withdrawn (922) from the HRSG, and will permit more steam to be directed into a steam turbine (not shown). As another example, heat exchangers 940, 942 and 944 could be connected in a loop. This configuration will pre-heat fuel 960 and heat water 970 going into the HRSG. Heat exchangers 940, 942 and 946 may be connected in a loop and this will maximize the fuel heating potential. Alternatively, all heat exchangers may be connected in a loop so that all heat exchangers will benefit from the heat removed from the compressed airflow of the compressor.

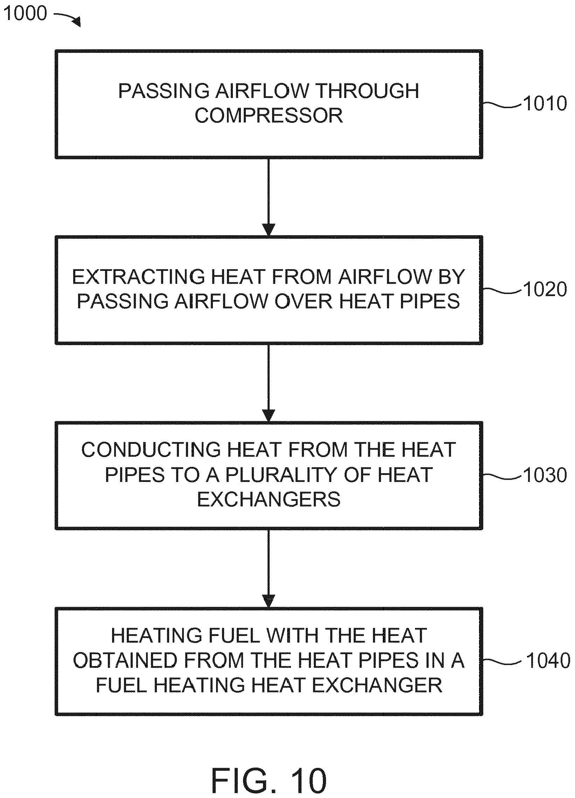

FIG. 10 illustrates a method 1000 for extracting heat from a compressed airflow generated by a turbomachine. The method includes a step 1010 of passing airflow through a compressor 910, and the compressor 910 acts on the airflow to create a compressed airflow discharged into a compressor discharge case 230 or into a compressor outlet portion 204. The airflow may also be discharged into a combustor inlet portion. An extracting step 1020 extracts heat from the compressed airflow by passing the compressed airflow over a plurality of heat pipes 222. The heat pipes 222 may include a molten salt heat transfer medium, such as, potassium or sodium, or a liquid metal or combinations thereof. The heat pipes 222 may be located between rotor blades and stator vanes in the compressor, and extend into an inter-stage gap (e.g., between stages or between rotor blades and stator vanes). A conducting step 1030 conducts heat from the heat pipes 222 to a heat pipe heat exchanger 940. The heat pipe heat exchanger 940 is configured to transfer heat to a fuel heating heat exchanger 942. A heating step 1040 heats the fuel 960 with the heat obtained from the heat pipes in the fuel heating heat exchanger 942. In addition, the heat pipe heat exchanger 940 may be operably connected to a circuit including a heat recovery steam generator (HRSG) heat exchanger 944.

The intercooling system of the present invention provides a number of advantages. Compressor efficiency may be improved and a reduced steam demand for fuel heating results in improved combined cycle heat rate. Compressor mass flow rate may be increased and the reduced steam demand for fuel heating improves combined cycle output. The turbine section buckets, wheels and combustion gas transition pieces may have improved lifespans due to the cooler compressor discharge airflow.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor including an intake portion and an outlet portion, the compressor compressing air received at the intake portion to form a compressed airflow that exits into the outlet portion;
   a combustor operably connected with the compressor, the combustor receiving the compressed airflow;
   a turbine operably connected with the combustor, the turbine receiving combustion gas flow from the combustor;
   an intercooler operatively connected to the compressor, at least a portion of the intercooler placed in an inter-stage gap between rotor blades and stator vanes of the compressor, the intercooler including a plurality of heat pipes that extend into the inter-stage gap, the plurality of heat pipes operatively connected to one or more manifolds, the plurality of heat pipes and the one or more manifolds are configured to transfer heat from the compressed airflow to a plurality of heat exchangers.
2. The turbomachine of clause 1, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
3. The turbomachine of any preceding clause, the plurality of heat pipes further comprising a molten salt heat transfer medium including one or combinations of, potassium or sodium.
4. The turbomachine of any preceding clause, the plurality of heat pipes located in the inter-stage gap corresponding to an air bleed-off stage of the compressor.
5. The turbomachine of any preceding clause, the plurality of heat pipes located in the inter-stage gap, the inter-stage gap located between a first stage and a last stage of the compressor.
6. The turbomachine of any preceding clause, the plurality of heat pipes located substantially circumferentially around the compressor.
7. The turbomachine of any preceding clause, wherein the one or more manifolds form part of a heat transfer loop, and the heat transfer medium in the heat transfer loop is at least one of:
   water, steam, glycol or oil.
8. The turbomachine of any preceding clause, wherein the plurality of heat pipes have a cross-sectional shape, the cross sectional shape generally comprising at least one of:
   circular, oval, or polygonal.
9. The turbomachine of any preceding clause, the plurality of heat pipes further comprising a plurality of fins, the plurality of fins configured to increase the heat transfer capability of the plurality of heat pipes.
10. The turbomachine of any preceding clause, the plurality of heat exchangers including a heat pipe heat exchanger operably connected to the plurality of heat pipes and the one or more manifolds, and the heat pipe heat exchanger also operably connected to:
   a fuel heating heat exchanger; or
   a heat recovery steam generator heat exchanger; or
   a fuel heating heat exchanger and a heat recovery steam generator heat exchanger.
11. An intercooler for a turbomachine, the turbomachine including a compressor, a combustor operably connected with the compressor, and a turbine operably connected with the combustor, the intercooler operatively connected to the compressor, at least a portion of the intercooler placed in an inter-stage gap between rotor blades and stator vanes of the compressor, the intercooler comprising:
   a plurality of heat pipes that extend into the inter-stage gap, the plurality of heat pipes operatively connected to one or more manifolds, the plurality of heat pipes and the one or more manifolds are configured to transfer heat from the compressed airflow to a plurality of heat exchangers.
12. The intercooler of any preceding clause, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
13. The intercooler of any preceding clause, the plurality of heat pipes further comprising a molten salt heat transfer medium including one or combinations of, potassium or sodium.
14. The intercooler of any preceding clause, the plurality of heat pipes located in the inter-stage gap, the inter-stage gap located between an 11^{th} stage and a 15^{th} stage of the compressor; and
   wherein the plurality of heat pipes are located substantially circumferentially around the compressor.
15. The intercooler of any preceding clause, the plurality of heat exchangers including a heat pipe heat exchanger operably connected to the plurality of heat pipes and the one or more manifolds, and the heat pipe heat exchanger also operably connected to:
   a fuel heating heat exchanger; or
   a heat recovery steam generator heat exchanger; or
   a fuel heating heat exchanger and a heat recovery steam generator heat exchanger.
16. The intercooler of any preceding clause, wherein the plurality of heat pipes have a cross-sectional shape, the cross sectional shape generally comprising at least one of:
   circular, oval, or polygonal; and
   wherein the plurality of heat pipes further comprise a plurality of fins, the plurality of fins configured to increase the heat transfer capability of the plurality of heat pipes.
17. A method of extracting heat from a compressed airflow generated by a turbomachine, the method comprising:
   passing an airflow through a compressor, the compressor acting on the airflow to create a compressed airflow discharged into a compressor discharge case;
   extracting heat from the compressed airflow by passing the compressed airflow over a plurality of heat pipes, the plurality of heat pipes located in an inter-stage gap between rotor blades and stator vanes of the compressor; and
   conducting heat from the plurality of heat pipes to a heat pipe heat exchanger, the heat pipe heat exchanger configured to transfer heat to a fuel heating heat exchanger.
18. The method of any preceding clause, wherein the inter-stage gap is located in the air bleed-off stage of the compressor.
19. The method of any preceding clause, wherein the plurality of heat pipes further comprise a molten salt heat transfer medium including one or combinations of, potassium or sodium.
20. The method of any preceding clause, the heat pipe heat exchanger operably connected to a circuit including a heat recovery steam generator heat exchanger.

## Claims

1. A turbomachine comprising:
a compressor (110) including an intake portion (202) and an outlet portion (204), the compressor compressing air received at the intake portion to form a compressed airflow that exits into the outlet portion;
a combustor (120) operably connected with the compressor (110), the combustor receiving the compressed airflow;
a turbine (130) operably connected with the combustor (120), the turbine receiving combustion gas flow from the combustor;
an intercooler (220) operatively connected to the compressor (110), at least a portion of the intercooler placed in an inter-stage gap (113) between rotor blades (111) and stator vanes (112) of the compressor, the intercooler including a plurality of heat pipes (222) that extend into the inter-stage gap, the plurality of heat pipes operatively connected to one or more manifolds (224), the plurality of heat pipes and the one or more manifolds are configured to transfer heat from the compressed airflow to a plurality of heat exchangers (241-244).

2. The turbomachine of claim 1, the plurality of heat pipes further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

3. The turbomachine of claim 1 or claim 2, the plurality of heat pipes being located in the inter-stage gap corresponding to an air bleed-off stage of the compressor, or between a first stage and a last stage of the compressor.

4. The turbomachine of any preceding claim, the plurality of heat pipes located substantially circumferentially around the compressor.

5. The turbomachine of any preceding claim, wherein the one or more manifolds form part of a heat transfer loop, and the heat transfer medium in the heat transfer loop is at least one of:
water, steam, glycol or oil.

6. The turbomachine of any preceding claim, wherein the plurality of heat pipes have a cross-sectional shape, the cross sectional shape generally comprising at least one of:
circular, oval, or polygonal; and
wherein the plurality of heat pipes further comprise a plurality of fins, the plurality of fins configured to increase the heat transfer capability of the plurality of heat pipes.

7. The turbomachine of any preceding claim, the plurality of heat exchangers including a heat pipe heat exchanger operably connected to the plurality of heat pipes and the one or more manifolds, and the heat pipe heat exchanger also operably connected to:
a fuel heating heat exchanger; or
a heat recovery steam generator heat exchanger; or
a fuel heating heat exchanger and a heat recovery steam generator heat exchanger.

8. An intercooler for a turbomachine, the turbomachine including a compressor (110), a combustor (120) operably connected with the compressor, and a turbine (130) operably connected with the combustor, the intercooler (220) operatively connected to the compressor (110), at least a portion of the intercooler placed in an inter-stage gap (113) between rotor blades (111) and stator vanes (112) of the compressor, the intercooler comprising:
a plurality of heat pipes (222) that extend into the inter-stage gap, the plurality of heat pipes operatively connected to one or more manifolds, the plurality of heat pipes and the one or more manifolds are configured to transfer heat from the compressed airflow to a plurality of heat exchangers (241-244).

9. The intercooler of claim 8, the plurality of heat pipes further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

10. The intercooler of claim 8 or claim 9, the plurality of heat pipes located in the inter-stage gap, the inter-stage gap located between an 11^{th} stage and a 15^{th} stage of the compressor; and
wherein the plurality of heat pipes are located substantially circumferentially around the compressor.

11. The intercooler of any one of claims 8 to 10, the plurality of heat exchangers including a heat pipe heat exchanger operably connected to the plurality of heat pipes and the one or more manifolds, and the heat pipe heat exchanger also operably connected to:
a fuel heating heat exchanger; or
a heat recovery steam generator heat exchanger; or
a fuel heating heat exchanger and a heat recovery steam generator heat exchanger.

12. The intercooler of any one of claims 8 to 11, wherein the plurality of heat pipes have a cross-sectional shape, the cross sectional shape generally comprising at least one of:
circular, oval, or polygonal; and
wherein the plurality of heat pipes further comprise a plurality of fins, the plurality of fins configured to increase the heat transfer capability of the plurality of heat pipes.

13. A method of extracting heat from a compressed airflow generated by a turbomachine, the method comprising:
passing an airflow through a compressor (110), the compressor acting on the airflow to create a compressed airflow discharged into a compressor discharge case (230);
extracting heat from the compressed airflow by passing the compressed airflow over a plurality of heat pipes (222), the plurality of heat pipes located in an inter-stage gap (113) between rotor blades (111) and stator vanes (112) of the compressor; and
conducting heat from the plurality of heat pipes (222) to a heat pipe heat exchanger, the heat pipe heat exchanger (240) configured to transfer heat to a fuel heating heat exchanger (241).

14. The method of claim 13, wherein the inter-stage gap is located in the air bleed-off stage of the compressor.

15. The method of claim 13 or claim 14, wherein the plurality of heat pipes further comprise a molten salt heat transfer medium including one or combinations of, potassium or sodium.
